# EUROPEAN PATENT APPLICATION

(11) **EP 4 596 830 A1**
(43) Date of publication of application: **06.08.2025**
(21) Application number: 24222998.7
(22) Date of filing: 23.12.2024
(51) Int. Cl.: E21D 9/00, E02D 3/12, E21D 20/02, E21B 7/02

(54) **UNDERGROUND TRENCHLESS ULTRA-SHORT RADIUS GRADIENT WRAPPED GROUTING METHOD AND DEVICE**

(30) Priority: 01.02.2024 CN 202410144689
(71) Applicant: University Of Science And Technology Beijing, Beijing 100083 (CN)
(72) Inventor: LV, Xiangfeng, Haidian District 100083 (CN); LI, Cantian, Haidian District 100083 (CN)
(74) Representative: Gille Hrabal Partnerschaftsgesellschaft mbB Patentanwälte

(57) **Abstract**

The present invention discloses an underground trenchless ultra-short radius gradient wrapped grouting device and method, and belongs to the technical field of underground space grouting reinforcement. The device includes: a travel system, a grouting system, and a direction adjustment system, wherein the travel system includes an engine, a driving shaft, and a crawler belt, the engine is connected to the driving shaft, and the driving shaft is wrapped by the crawler belt. The device can achieve 90-degree vertical borehole grouting from the ground and ultra-short radius horizontally guided borehole grouting, is wider in application range, and higher in practicability. The "wrap" shaped reinforcement to the reinforcement range space is achieved after grouting to protect the safety of above-ground roads and the existing buildings at close distances on both sides of a tunnel and the safety of tunnel construction, which simplifies the construction process, and achieves better reinforcement effects.

## Description

### TECHNICAL FIELD

The present invention belongs to the technical field of space grouting reinforcement, and in particular relates to an underground trenchless ultra-short radius gradient wrapped grouting method and device.

### BACKGROUND

Under the long-term coupling action of various loads such as frequent traffic loads and underground pipeline leakage and water scouring, underground rock-soil bodies of urban roads will gradually produce layered settlement deformation between road base layers; and the environment of urban tunnel construction is complicated, and it is common to encounter the situation of underpassing the existing buildings or above-ground and underground simultaneous construction, in order to reduce the mutual influence of public environments of the two, the commonly used technology nowadays is to subject a pavement base and the top of a tunnel to grouting reinforcement for reinforcing the top of the tunnel and ensure the safety of the tunnel construction.

However, with the development of cities, the existing buildings are dense, multi-story underground tunnels have become a mainstream design, buildings on the roads and on both sides of the tunnel are severely affected by the tunnel construction, and there is often a certain thickness of soil layer on the top of the tunnel and under the roads. The tunnel construction in this environment severely affects the safety of use of the roads above and the existing buildings on both sides. When the roads above and the underground tunnels are under construction at the same time, a simultaneous construction scheme is often employed to improve the construction efficiency, and construction safety requirements are greatly increased. Therefore, it is necessary to provide a new grouting construction process to solve the problem of the safety of the above-ground and underground simultaneous construction scheme mentioned in the above background.

### SUMMARY

In view of this, the present invention provides an underground trenchless ultra-short radius gradient wrapped grouting method and device.

The present invention adopts the following technical solutions:
provided is an underground trenchless ultra-short radius gradient wrapped grouting device, including: a travel system, a grouting system, and a direction adjustment system, wherein
the travel system includes an engine, a driving shaft, and a crawler belt, the engine is connected to the driving shaft, and the driving shaft is wrapped by the crawler belt;
the direction adjustment system is configured for direction adjustment of a drill bit at a front end, the grouting system is configured to perform grouting on boreholes in a desired grouting reinforcement range, the direction adjustment system and the grouting system are of a combined structure, and the combined structure includes: a connecting arm, a connecting rod, a first rotation limiting plate, a movable rod, a first hydraulic rod, a second rotation limiting plate, a third hydraulic rod, a side block, a second hydraulic rod, a four-corner butt block, a fourth hydraulic rod, a connecting piece, a drill bit, and a grouting guide tube; and
an end of the connecting arm is hinged with the first rotation limiting plate through a rotating rod, the movable rod is hinged under an outer wall of the first rotation limiting plate through a rotating rod, the first hydraulic rod is hinged on an outer wall of the first rotation limiting plate through a rotating rod, a bottom end of the movable rod and a bottom end of the first hydraulic rod are each hinged with the second rotation limiting plate through a rotating rod, a front end of the second rotation limiting plate is hinged with the third hydraulic rod, a top end of the third hydraulic rod is hinged with the side block through a rotating rod, a side of the side block is hinged with the second hydraulic rod, a driving rod of the second hydraulic rod is hinged with the four-corner butt block through a rotating rod, an inner upper side of the four-corner butt block is hinged with the fourth hydraulic rod, a driving rod of the fourth hydraulic rod is hinged with the connecting piece through a rotating rod, a drill bit base is provided with the drill bit, and a tail of the drill bit is connected with the grouting guide tube.

Further, the grouting device achieves 90-degree vertical borehole grouting from the ground, and the grouting device achieves ultra-short radius horizontally guided borehole grouting, the ultra-short radius being 5 m.

Further, the drill bit is provided with a hollow tube inside, and the grouting system uses the drill bit to drill holes, and the grouting system uses the drill bit for grouting.

Provided is an underground trenchless ultra-short radius gradient wrapped grouting method, employing the above grouting device, and including the steps of:
S1, determining a desired grouting reinforcement range space, and determining locations of a vertical grouting surface and a horizontal grouting surface according to the reinforcement range space, the vertical grouting surface intersecting with and being connected with the horizontal grouting surface;
S2, deploying a drilling point position and a drilling angle, deploying the grouting device on the ground, and deploying the drilling point position and the drilling angle according to the vertical grouting surface and the horizontal grouting surface, the angle being an included angle between a drilling direction and a drilling surface;
S3, grouting the vertical grouting surface, vertically drilling holes, by the grouting device, to the reinforcement range space, performing vertical grouting on both sides of the reinforcement range space, plugging grouting holes after completion of the vertical grouting, and performing grouting curing;
S4, grouting the horizontal grouting surface, horizontally and directionally drilling holes, by the grouting device, to a top of the reinforcement range space, performing horizontal grouting on an interlayer space between the top and a road bottom, plugging grouting holes after completion of the grouting, and performing grouting curing, the horizontal grouting surface intersecting with and being connected with the vertical grouting surface; and
S5, exploring a grouting effect, namely exploring a "wrap" shaped reinforcement layer formed around the reinforcement range space, the horizontal grouting surface and the vertical grouting surface being completely grouted, a connection at the intersection of the horizontal grouting surface and the vertical grouting surface being reliable, the "wrap" shape being a wrap formed by connecting the vertical grouting surface with the horizontal grouting surface for an underlying tunnel.

Further, the vertical grouting surface is at a distance of 1-5 m from the reinforcement range space, and the horizontal grouting surface is at a distance of 0-2 m from the reinforcement range space in S1.

Further, grouting casing pipes and grouting valve pipes are installed in boreholes after completion of vertically drilling holes in S3, and then a grouting material is injected into both sides of the reinforcement range space for reinforcement.

Further, grouting soft casing pipes and grouting valve pipes are installed in the boreholes after completion of horizontally and directionally drilling holes in S4, and then a grouting material is injected into a formation area above the reinforcement range space for reinforcement.

Further, the grouting material desired includes a waste mud component in the tunnel.

Further, the grouting material includes cement, a waste mud, sodium silicate, and a curing agent, wherein a mass ratio of water to a binder in the grouting material is 0.45-0.65: 1, a mass ratio of fly ash to the cement in the grouting material is 1.25-2.5: 1, a mass proportion of the curing agent blended is 5-15%, a mass proportion of sodium silicate is 45.5-49.5%, and the curing agent consists of urease and a soil curing agent in a mass ratio of 1:2.

Further, a grouting pressure during the grouting should be controlled to be 0.5-2.0 Mpa.

### Beneficial effects:

(1) The present invention provides an underground trenchless ultra-short radius gradient wrapped grouting method. "Wrap" shaped reinforcement to the reinforcement range space is achieved after grouting to protect the safety of above-ground roads and the existing buildings at close distances on both sides of a tunnel and the safety of tunnel construction. The grouting method not only simplifies the construction process, but also achieves better reinforcement effects; and moreover, a grouting slurry in the present invention employs the in-situ grouting solidification technology, which not only realizes in-situ recycling and harmless treatment of engineering solid waste, but also realizes green construction.
(2) The present invention provides an underground trenchless ultra-short radius gradient wrapped grouting device. The device can achieve vertical grouting and ultra-short radius horizontal grouting by the arrangement of the "grouting system" and the "direction adjustment system", as well as the assembly and connection of components such as "the connecting arm, the connecting rod, the first rotation limiting plate, the movable rod, the first hydraulic rod, the second rotation limiting plate, the third hydraulic rod, the side block, the second hydraulic rod, the four-corner butt block, the fourth hydraulic rod, the connecting piece, the drill bit, and the grouting guide tube", solving the technical problem that the existing grouting level can't realize horizontally guided drilling at a short distance, and a construction process of dense long-distance horizontal borehole grouting for the existing buildings in cities is greatly limited.

### BRIEF DESCRIPTION OF THE DRAWINGS

In order to illustrate the technical solutions of the embodiments of the present invention more clearly, the drawings required to be used in the embodiments will be briefly described below, and obviously, the drawings in the following description are only some embodiments of the present invention, and other drawings can be obtained from these drawings for those of ordinary skill in the art without inventive steps.

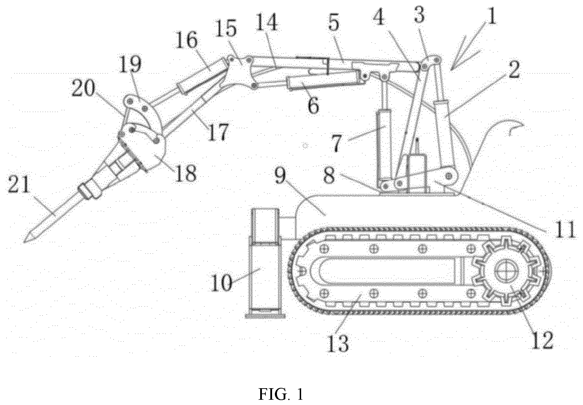

FIG. 1 is a structural schematic diagram of an underground trenchless ultra-short radius gradient wrapped grouting device according to the present invention. Graphic illustration: 1, trenchless ultra-short radius gradient wrapped grouting device, 2, first hydraulic rod, 3, first rotation limiting plate, 4, movable rod, 5, connecting arm, 6, second hydraulic rod, 7, third hydraulic rod, 8, control base, 9, support stabilizing base, 10, slurry storage tank, 11, second rotation limiting plate, 12, driving shaft, 13, crawler belt, 14, grouting guide tube, 15, four-corner butt block, 16, fourth hydraulic rod, 17, connecting rod, 18, drill bit base, 19, second arc block, 20, connecting piece, and 21, drill bit.

### DETAILED DESCRIPTION

For better understanding of the technical solutions of the present invention, the embodiments of the present invention will be described in detail below with reference to the accompanying drawings.

It should be clear that the described embodiments are only some, but not all, embodiments of the present invention. Based on the embodiments in the present invention, all other embodiments obtained by those of ordinary skill in the art without making inventive steps belong to the scope of protection of the present invention.

### Embodiment 1

Provided is an underground trenchless ultra-short radius gradient wrapped grouting device, including: a travel system, a grouting system, and a direction adjustment system, wherein
the travel system includes an engine, a driving shaft, and a crawler belt, the engine is connected to the driving shaft, and the driving shaft is wrapped by the crawler belt; the direction adjustment system is configured for direction adjustment of a drill bit at a front end, the grouting system is configured to perform grouting on boreholes in a desired grouting reinforcement range, the direction adjustment system and the grouting system are of a combined structure, and the combined structure includes: a connecting arm 5, a connecting rod 17, a first rotation limiting plate 3, a movable rod 4, a first hydraulic rod 2, a second rotation limiting plate 11, a third hydraulic rod 7, a side block, a second hydraulic rod 6, a four-corner butt block 15, a fourth hydraulic rod 16, a connecting piece 20, a drill bit 21, and a grouting guide tube 14; and
an end of the connecting arm 5 is hinged with the first rotation limiting plate 3 through a rotating rod, the movable rod 4 is hinged under an outer wall of the first rotation limiting plate 3 through a rotating rod, the first hydraulic rod 2 is hinged on an outer wall of the first rotation limiting plate 3 through a rotating rod, a bottom end of the movable rod 4 and a bottom end of the first hydraulic rod 2 are each hinged with the second rotation limiting plate 11 through a rotating rod, a front end of the second rotation limiting plate 11 is hinged with the third hydraulic rod 7, a top end of the third hydraulic rod 7 is hinged with the side block through a rotating rod, a side of the side block is hinged with the second hydraulic rod 6, a driving rod of the second hydraulic rod 6 is hinged with the four-corner butt block 15 through a rotating rod, an inner upper side of the four-corner butt block 15 is hinged with the fourth hydraulic rod 16, a driving rod of the fourth hydraulic rod 16 is hinged with the connecting piece 20 through a rotating rod, a drill bit base is provided with the drill bit 21, and a tail of the drill bit 21 is connected with the grouting guide tube 14.

Further, the grouting device achieves 90-degree vertical borehole grouting with the ground, and the grouting device achieves ultra-short radius horizontally guided borehole grouting, the ultra-short radius being 5 m.

Further, the drill bit is provided with a hollow tube inside, and the grouting system uses the drill bit to drill holes, and the grouting system uses the drill bit for grouting.

Provided is an underground trenchless ultra-short radius gradient wrapped grouting method, employing the above grouting device, and including the steps of:
S1, determining a desired grouting reinforcement range space, and determining locations of a vertical grouting surface and a horizontal grouting surface according to the reinforcement range space, the vertical grouting surface intersecting with and being connected with the horizontal grouting surface;
S2, deploying a drilling point position and a drilling angle, deploying the grouting device on the ground, and deploying the drilling point position and the drilling angle according to the vertical grouting surface and the horizontal grouting surface, the angle being an included angle between a drilling direction and a drilling surface;
S3, grouting the vertical grouting surface, vertically drilling holes, by the grouting device, to the reinforcement range space, performing vertical grouting on both sides of the reinforcement range space, plugging grouting holes after completion of the vertical grouting, and performing grouting curing;
S4, grouting the horizontal grouting surface, horizontally and directionally drilling holes, by the grouting device, to a top of the reinforcement range space, performing horizontal grouting on an interlayer space between the top and a road bottom, plugging grouting holes after completion of the grouting, and performing grouting curing, the horizontal grouting surface intersecting with and being connected with the vertical grouting surface; and
S5, exploring a grouting effect, namely exploring a "wrap" shaped reinforcement layer formed around the reinforcement range space, the horizontal grouting surface and the vertical grouting surface being completely grouted, a connection at the intersection of the horizontal grouting surface and the vertical grouting surface being reliable, the "wrap" shape being a wrap formed by connecting the vertical grouting surface with the horizontal grouting surface for an underlying tunnel.

Further, the vertical grouting surface is at a distance of 1-5 m from the reinforcement range space, and the horizontal grouting surface is at a distance of 0-2 m from the reinforcement range space in S 1.

Further, grouting casing pipes and grouting valve pipes are installed in boreholes after completion of vertically drilling holes in S3, and then a grouting material is injected into both sides of the reinforcement range space for reinforcement.

Further, grouting soft casing pipes and grouting valve pipes are installed in the boreholes after completion of horizontally and directionally drilling holes in S4, and then a grouting material is injected into a formation area above the reinforcement range space for reinforcement.

Further, the grouting material desired includes a waste mud component in the tunnel.

Further, the grouting material includes cement, a waste mud, sodium silicate, and a curing agent, wherein a mass ratio of water to a binder in the grouting material is 0.45-0.65: 1, a mass ratio of fly ash to the cement in the grouting material is 1.25-2.5: 1, a mass proportion of the curing agent blended is 5-15%, a mass proportion of sodium silicate is 45.5-49.5%, and the curing agent consists of urease and a soil curing agent in a mass ratio of 1:2.

Further, a grouting pressure during the grouting should be controlled to be 0.5-2.0 Mpa.

### Embodiment 2

By employing the underground trenchless ultra-short radius gradient wrapped grouting device, the grouting method includes the steps of:
S1, determining a desired grouting reinforcement range space, and determining locations of a vertical grouting surface and a horizontal grouting surface according to the reinforcement range space, the vertical grouting surface intersecting with and being connected with the horizontal grouting surface;
S2, deploying a drilling point position and a drilling angle, deploying the grouting device on the ground, and deploying the drilling point position and the drilling angle according to the vertical grouting surface and the horizontal grouting surface, the angle being an included angle between a drilling direction and a drilling surface;
S3, grouting the vertical grouting surface, vertically drilling holes, by the grouting device, to the reinforcement range space, performing vertical grouting on both sides of the reinforcement range space, plugging grouting holes after completion of the vertical grouting, and performing grouting curing;
S4, grouting the horizontal grouting surface, drilling holes, by the grouting device, to a top of the reinforcement range space by adopting a ultra-short radius horizontal directional drilling technology, performing horizontal grouting on an interlayer space between the top and a road bottom, plugging grouting holes after completion of the grouting, and performing grouting curing, the horizontal grouting surface intersecting with and being connected with the vertical grouting surface, wherein the ultra-short radius refers to a radius of a circle corresponding to an arc of a horizontal grouting path, the smaller the radius, the larger a radian angle, the larger a radian, the farther a grouting point is from a grouting destination, and a minimum value of the ultra-short radius can be up to 5 m; and
S5, exploring a grouting effect, namely exploring a "wrap" shaped reinforcement layer formed around the reinforcement range space, the horizontal grouting surface and the vertical grouting surface being completely grouted, a connection at the intersection of the horizontal grouting surface and the vertical grouting surface being reliable, the "wrap" shape referring to a wrap formed by connecting the vertical grouting surface with the horizontal grouting surface for an underlying tunnel.

Further, the vertical grouting surface is at a distance of 1-5 m from the reinforcement range space, and the horizontal grouting surface is at a distance of 0-2 m from the reinforcement range space in S 1.

Further, the vertical drilling in S3 is performed on both sides of the reinforcement range space, and after the drilling is completed, grouting casing pipes and grouting valve pipes are installed in boreholes, and then a grouting material is injected into both sides of the reinforcement range space for reinforcement.

Further, after drilling construction is completed in S4, grouting soft casing pipes and grouting valve pipes are installed in the boreholes, and then a grouting material is injected into a formation area above the reinforcement range space for reinforcement.

Further, the grouting material desired includes a waste mud component in the tunnel.

Further, the grouting material includes cement, a waste mud, sodium silicate, and a curing agent, wherein a mass ratio of water to a binder in the grouting material is 0.45-0.65: 1, a mass ratio of fly ash to the cement in the grouting material is 1.25-2.5: 1, the amount of cement replacement is 15-35%, a mass proportion of the curing agent blended is 5-15%, a mass proportion of sodium silicate is 45.5-49.5%, and the curing agent consists of urease and a soil curing agent in a mass ratio of 1:2.

Further, a grouting pressure during the grouting should be controlled to be 0.5-2.0 Mpa.

### Embodiment 3

By employing the underground trenchless ultra-short radius gradient wrapped grouting device, the grouting method includes the steps of:
S1, determining a desired grouting reinforcement range space, and determining locations of a vertical grouting surface and a horizontal grouting surface according to the reinforcement range space, the vertical grouting surface intersecting with and being connected with the horizontal grouting surface;
S2, deploying a drilling point position and a drilling angle, deploying the grouting device on the ground, and deploying the drilling point position and the drilling angle according to the vertical grouting surface and the horizontal grouting surface, the angle being an included angle between a drilling direction and a drilling surface;
S3, grouting the vertical grouting surface, vertically drilling holes, by the grouting device, to the reinforcement range space, performing vertical grouting on both sides of the reinforcement range space, plugging grouting holes after completion of the vertical grouting, and performing grouting curing;
S4, grouting the horizontal grouting surface, drilling holes, by the grouting device, to a top of the reinforcement range space by adopting a ultra-short radius horizontal directional drilling technology, performing horizontal grouting on an interlayer space between the top and a road bottom, plugging grouting holes after completion of the grouting, and performing grouting curing, the horizontal grouting surface intersecting with and being connected with the vertical grouting surface; and
S5, exploring a grouting effect, namely exploring a "wrap" shaped reinforcement layer formed around the reinforcement range space, the horizontal grouting surface and the vertical grouting surface being completely grouted, a connection at the intersection of the horizontal grouting surface and the vertical grouting surface being reliable, the "wrap" referring to a wrap shape formed by connecting the vertical grouting surface with the horizontal grouting surface for an underlying tunnel.

Further, the vertical grouting surface is at a distance of 1-5 m from the reinforcement range space, and the horizontal grouting surface is at a distance of 0-2 m from the reinforcement range space in S1.

Further, the vertical drilling in S3 is performed on both sides of the reinforcement range space, and after the drilling is completed, grouting casing pipes and grouting valve pipes are installed in boreholes, and then a grouting material is injected into both sides of the reinforcement range space for reinforcement.

Further, after drilling construction is completed in S4, grouting soft casing pipes and grouting valve pipes are installed in the boreholes, and then a grouting material is injected into a formation area above the reinforcement range space for reinforcement.

Further, the grouting material desired includes a waste mud component in the tunnel.

Further, the grouting material is composed of cement, a waste mud, sodium silicate, and a curing agent, wherein a mass ratio of water to a binder in the grouting material is 0.45-0.65:1, a mass ratio of fly ash to the cement in the grouting material is 1.25-2.5:1, the amount of cement replacement is 15-35%, a mass proportion of the curing agent blended is 5-15%, a mass concentration of sodium silicate is 45.5-49.5%, and the curing agent consists of urease and a soil curing agent in a mass ratio of 1:2.

Further, a grouting pressure during the grouting should be controlled to be 0.5-2.0 Mpa, boreholes in S4 are "U" shaped, and a length of the boreholes is generally not more than 100 m; and a rotation angle of the boreholes at a target is 0°, that is, the boreholes are horizontal at a final grouting point. The ends of boreholes in a horizontal section form a grouting section, a vertical depth of the boreholes in the horizontal section can reach 2-15 m, and a length of the grouting section is 15-30 m.

A combination of drilling tools used in S3 and S4 includes a Φ150 mm roller bit, a Φ105 mm screw drilling tool, a Φ89 mm non-magnetic drill collar and a Φ73 mm drill rod; and other groups and schemes can also be selected to adapt to more construction requirements.

The embodiments of the present invention have been described above in detail. The principles and embodiments of the present invention have been described herein with reference to specific examples, and the description of the above embodiments are only intended to assist in understanding the method of the present invention and its core concept. Meanwhile, for those of ordinary skill in the art, changes may be made to the specific embodiments and the application range based on the concept of the present invention. In conclusion, the description should not be construed as limiting the present invention.

In particular, a rotating rod extents along a hinge axis and/or has a pin shape.

In particular, the connecting rod 17 rotates about the four-corner butt block 15 during employing the underground trenchless ultra-short radius gradient wrapped grouting device.

In particular, it is provided an underground trenchless ultra-short radius gradient wrapped grouting device and method, wherein, by using the grouting device, through the steps of determining a desired grouting reinforcement range space, deploying a drilling point position and a drilling angle, grouting a vertical grouting surface, grouting a horizontal grouting surface, exploring the grouting effect (and the like and/or especially as described above) in sequence, "wrap" shaped reinforcement to the reinforcement range space is achieved after grouting to protect the safety of above-ground roads and the existing buildings at close distances on both sides of a tunnel and the safety of tunnel construction, which simplifies the construction process, and achieves better reinforcement effects.

In one particular embodiment, the connecting rod is turnable, preferably axially turnable (spinnable) like the drill bit or turnable together with the drill bit. In this embodiment, when employing the underground trenchless ultra-short radius gradient wrapped grouting device, the connecting rod and the drill bit are turning, preferably about the same axis, preferably the longitudinal axis of the connecting rod or drill bit.

## Claims

1. An underground trenchless ultra-short radius gradient wrapped grouting device, **characterized by** including: a travel system, a grouting system, and a direction adjustment system, wherein
the travel system includes an engine, a driving shaft, and a crawler belt, the engine is connected to the driving shaft, and the driving shaft is wrapped by the crawler belt;
the direction adjustment system is configured for direction adjustment of a drill bit at a front end, the grouting system is configured to perform grouting on boreholes in a desired grouting reinforcement range, the direction adjustment system and the grouting system are of a combined structure, and the combined structure includes: a connecting arm, a connecting rod, a first rotation limiting plate, a movable rod, a first hydraulic rod, a second rotation limiting plate, a third hydraulic rod, a side block, a second hydraulic rod, a four-corner butt block, a fourth hydraulic rod, a connecting piece, a drill bit, and a grouting guide tube; and
an end of the connecting arm is hinged with the first rotation limiting plate through a rotating rod, the movable rod is hinged under an outer wall of the first rotation limiting plate through a rotating rod, the first hydraulic rod is hinged on an outer wall of the first rotation limiting plate through a rotating rod, a bottom end of the movable rod and a bottom end of the first hydraulic rod are each hinged with the second rotation limiting plate through a rotating rod, a front end of the second rotation limiting plate is hinged with the third hydraulic rod, a top end of the third hydraulic rod is hinged with the side block through a rotating rod, a side of the side block is hinged with the second hydraulic rod, a driving rod of the second hydraulic rod is hinged with the four-corner butt block through a rotating rod, an inner upper side of the four-corner butt block is hinged with the fourth hydraulic rod, a driving rod of the fourth hydraulic rod is hinged with the connecting piece through a rotating rod, a drill bit base is provided with the drill bit, and a tail of the drill bit is connected with the grouting guide tube.

2. The underground trenchless ultra-short radius gradient wrapped grouting device according to claim 1, **characterized in that** the grouting device achieves 90-degree vertical borehole grouting from the ground, and the grouting device achieves ultra-short radius horizontally guided borehole grouting, the ultra-short radius being 5 m.

3. The underground trenchless ultra-short radius gradient wrapped grouting device according to claim 2, **characterized in that** the drill bit is provided with a hollow tube inside, the grouting system uses the drill bit to drill holes, and the grouting system uses the drill bit for grouting.

4. An underground trenchless ultra-short radius gradient wrapped grouting method, **characterized by** employing the grouting device according to any one of claims 1 to 3, the grouting method including the steps of:
S1, determining a desired grouting reinforcement range space, and determining locations of a vertical grouting surface and a horizontal grouting surface according to the reinforcement range space, the vertical grouting surface intersecting with and being connected with the horizontal grouting surface;
S2, deploying a drilling point position and a drilling angle, deploying the grouting device on the ground, and deploying the drilling point position and the drilling angle according to the vertical grouting surface and the horizontal grouting surface, the angle being an included angle between a drilling direction and a drilling surface;
S3, grouting the vertical grouting surface, vertically drilling holes, by the grouting device, to the reinforcement range space, performing vertical grouting on both sides of the reinforcement range space, plugging grouting holes after completion of the vertical grouting, and performing grouting curing;
S4, grouting the horizontal grouting surface, horizontally and directionally drilling holes, by the grouting device, to a top of the reinforcement range space, performing horizontal grouting on an interlayer space between the top and a road bottom, plugging grouting holes after completion of the grouting, and performing grouting curing, the horizontal grouting surface intersecting with and being connected with the vertical grouting surface; and
S5, exploring a grouting effect, namely exploring a "wrap" shaped reinforcement layer formed around the reinforcement range space, the horizontal grouting surface and the vertical grouting surface being completely grouted, a connection at the intersection of the horizontal grouting surface and the vertical grouting surface being reliable, the "wrap" shape being a wrap formed by connecting the vertical grouting surface with the horizontal grouting surface for an underlying tunnel.

5. The underground trenchless ultra-short radius gradient wrapped grouting method according to claim 4, **characterized in that** the vertical grouting surface is at a distance of 1-5 m from the reinforcement range space, and the horizontal grouting surface is at a distance of 0-2 m from the reinforcement range space in S1.

6. The underground trenchless ultra-short radius gradient wrapped grouting method according to claim 5, **characterized in that** grouting casing pipes and grouting valve pipes are installed in boreholes after completion of vertically drilling holes in S3, and then a grouting material is injected into both sides of the reinforcement range space for reinforcement.

7. The underground trenchless ultra-short radius gradient wrapped grouting method according to claim 6, **characterized in that** grouting soft casing pipes and grouting valve pipes are installed in the boreholes after completion of horizontally and directionally drilling holes in S4, and then a grouting material is injected into a formation area above the reinforcement range space for reinforcement.

8. The underground trenchless ultra-short radius gradient wrapped grouting method according to claim 7, **characterized in that** the grouting material desired includes a waste mud component in the tunnel.

9. The underground trenchless ultra-short radius gradient wrapped grouting method according to claim 8, **characterized in that** the grouting material includes cement, a waste mud, sodium silicate, and a curing agent, wherein a mass ratio of water to a binder in the grouting material is 0.45-0.65:1, a mass ratio of fly ash to the cement in the grouting material is 1.25-2.5:1, a mass proportion of the curing agent blended is 5-15%, a mass proportion of sodium silicate is 45.5-49.5%, and the curing agent consists of urease and a soil curing agent in a mass ratio of 1:2.

10. The underground trenchless ultra-short radius gradient wrapped grouting method according to claim 9, **characterized in that** a grouting pressure during the grouting should be controlled to be 0.5-2.0 Mpa.
